# EUROPEAN PATENT APPLICATION

(11) **EP 4 800 277 A1**
(43) Date of publication of application: **02.09.2026**
(21) Application number: 26160390.6
(22) Date of filing: 24.02.2026
(51) Int. Cl.: F16K 31/06, F16K 37/00

(54) **METHOD OF OPERATING A SOLENOID VALVE**

(30) Priority: 26.02.2025 IT 202500003882
(71) Applicant: Robert Bosch GmbH, 70442 Stuttgart (DE)
(72) Inventor: Zaccarelli, Pierre Luigi, 41126 Modena (IT); Mennuti, Francesco, 41015 Nonantola (IT)

(57) **Abstract**

The present invention relates to a method of operating a solenoid valve (1), said solenoid valve being configured to regulate a flow of fluid along a conduit (10) along which said solenoid valve is positioned, said method comprising the following steps:
a. Receiving a command to bring said solenoid valve from a closed position, at which said solenoid valve prevents the flow of fluid along said conduit, to an open position of said valve, in which said open position allows at least partial passage of fluid along said conduit through said solenoid valve;
b. Providing a load signal, said load signal being configured to directly or indirectly describe a pressure along said conduit at said solenoid valve;
c. Providing said solenoid valve with a current signal to enable said solenoid valve to assume said open position, wherein said current signal comprises a current peak having an amplitude, wherein said amplitude of said peak depends on said load signal provided in said step b.

## Description

### TECHNICAL FIELD

The present invention relates to the field of a method of operating a solenoid valve in a hydraulic application.

### BACKGROUND

The precise control of proportional pilot-operated solenoid valves represents an engineering challenge due to their particular structure and principle of operation. These valves, designed to handle large flow rates with a relatively small electromagnetic actuator, utilize internal piloting to modulate the flow. The current provided to the actuator determines the open position of the valve, allowing for proportional control. However, the internal geometry of these valves introduces a significant complication: the control components, such as piston and poppet, are not balanced with respect to the fluid pressure. This means that the force exerted by the load pressure opposes the movement of the actuator, making the force necessary for the initial opening dependent on the pressure itself.

This imbalance of forces generates two main problems. First, the non-repeatability of the movement: for the same command signal, the open position of the valve will vary based on the load pressure. This makes it difficult to obtain precise and reliable control, especially in dynamic systems where the pressure can fluctuate. Second, the phenomenon of over-opening occurs. Once the initial force due to the pressure is overcome, the actuator, powered by the command current, finds itself operating in a condition of lesser resistance, causing a greater opening than desired. This abrupt variation in opening results in a discontinuity in the flow, compromising the fluidity of the movement controlled by the valve.

A commonly used technique to mitigate these problems is "peak and hold". This method involves the application of a brief current pulse, the "peak", at the moment of opening. This current peak provides the actuator with the extra force necessary to overcome the initial resistance due to the load pressure. Immediately after the peak, the current is reduced to a "hold" value corresponding to the desired open position. In this way, the necessary force is provided for the initial opening without causing a subsequent over-opening. "Peak and hold" is an effective and relatively simple method to implement, borrowed from other technological fields, such as the control of injectors in high-performance engines. However, it has some limitations that deserve attention.

The effectiveness of "peak and hold" indeed depends heavily on the correct calibration of the current peak and its duration. An insufficient peak might not guarantee the opening of the valve, while an excessive peak could still cause over-opening and oscillations. Determining the optimal parameters can be complex, since the load pressure can vary during operation.

The duration of the current peak is also a critical parameter. An overly short pulse might not provide enough energy to overcome the initial resistance, while an overly long pulse involves a waste of energy and greater stress on the actuator, with a consequent reduction of its useful life.

The application of the "peak and hold" method also proves complex in the context of the full range of hydraulic products due to the wide variability of the load. The pressure, influenced by factors such as the workload or the activation of the end-of-stroke, can indeed span several orders of magnitude. This high variability makes it difficult to define a set of universally valid parameters for all operating conditions. A set of parameters optimized for the maximum pressure would be excessive at lower pressures, causing an undesired over-opening, perceived by the operator as a jerky jolt in the movement. Conversely, a parameterization calibrated on a reduced load might prove ineffective in the presence of maximum pressure, reintroducing the previously described control problems, namely the difficulty of opening and the lack of repeatability of the movement.

The purpose of the present invention is therefore to provide a method of operating a solenoid valve that is able to solve the problems listed above.

### SUMMARY

According to one form of embodiment of the present invention, a method of operating a solenoid valve is provided to regulate the flow of a fluid in a conduit. When a command is received to open the valve, the method provides for the acquisition of a signal representing the pressure in the conduit in the proximity of the valve. This load signal is used to determine the amplitude of a current peak to be applied to the solenoid valve to initiate the opening. With this solution, there is the advantage that the amplitude of the current peak is adapted to the load pressure, allowing for a more effective opening and reducing the risk of over-opening or failed opening. In fact, the invention proposes the use of means, for example a pressure transducer, to detect the load and provide a signal that, processed by the control algorithm, modulates the amplitude and/or the duration of the current peak sent to the actuator. Knowing the characteristics of the solenoid valve, and therefore the relationship between opening current and pressure, it is possible to define the law that links these quantities and integrate it into the control logic. This relationship is generally linear, simplifying its implementation: it is sufficient to know, through design data or experimental tests, the coefficient of proportionality that links current and pressure.

According to one form of embodiment of the present invention, in the previously described method, not only the amplitude, but also the duration of the current peak is determined as a function of the load signal. With this solution, the advantage of optimizing the duration of the pulse based on the pressure is obtained, further improving the efficiency of the opening and reducing the stress on the actuator and consequently prolonging its useful life.

According to one form of embodiment of the present invention, in the previously described method, the current signal applied to the solenoid valve has a monotonically increasing trend up to a threshold value, at which the current peak is applied. This solution has the advantage of contributing to greater stability and precision in the control of the valve opening thanks to a controlled trend of the current signal, with a precise peak at a defined threshold, thus allowing the regulation of the open position of the solenoid valve after the current peak has been exhausted.

According to one form of embodiment of the present invention, in the previously described method, the threshold value of the current signal, beyond which the peak is applied, is in turn dependent on the load signal. With this solution, there is the advantage of further optimizing the moment of application of the peak, improving the response of the valve to load variations thanks to the adaptation of the threshold to the pressure and providing the peak at the exact necessary moment.

According to one form of embodiment of the present invention, in the previously described method, the amplitude of the current peak is calculated by means of a function that has as input the load signal and returns as output the value of the amplitude. This solution offers the advantage of implementing a precise and repeatable control logic, adapting the current peak to the different operating conditions in a deterministic way thanks to the definition of a function for the calculation of the amplitude. This approach also facilitates the implementation of the method in automated control systems.

### BRIEF DESCRIPTION OF THE FIGURES

The present invention will be described with reference to the attached figures in which the same reference numbers and/or signs indicate the same parts and/or similar and/or corresponding parts of the system.
Figure 1 shows a solenoid valve according to the state of the art;
Figure 2 shows a first part of a method of operating a solenoid valve according to a form of embodiment of the present invention;
Figure 3 shows a second part of a method of operating a solenoid valve according to a form of embodiment of the present invention;
Figure 4 shows a trend of a current signal to enable a solenoid valve to assume an open position according to a form of embodiment of the present invention.

### DETAILED DESCRIPTION

Hereinafter, the present invention is described by referring to particular forms of embodiment, as illustrated in the attached drawing tables. However, the present invention is not limited to the particular forms of embodiment described in the following detailed description and represented in the figures, but rather the described forms of embodiment simply exemplify the various aspects of the present invention, the purpose of which is defined by the claims. Further modifications and variations of the present invention will appear clear to the person skilled in the art.

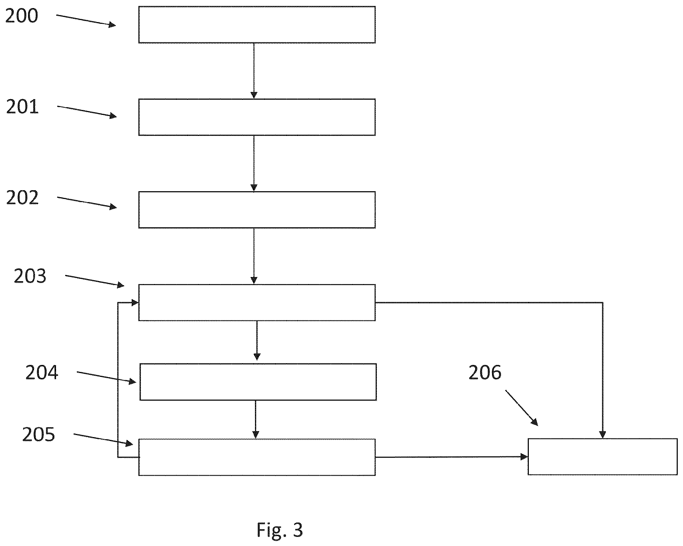

As will be clear from the continuation of the present description, figure 3 shows an example at which the present invention can be used. However, there are other examples of systems in which this invention can be used. It is therefore clear that the present invention is not limited to the particular examples of application shown in the figures.

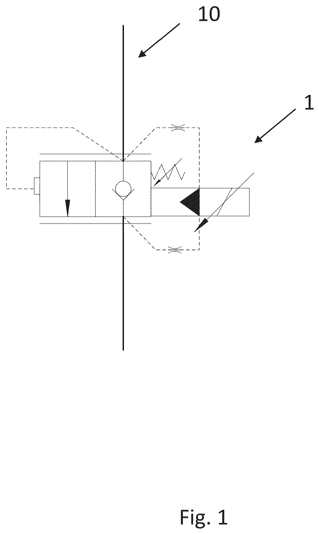

Figure 1 shows a solenoid valve 1 commonly known from the state of the art that can be used for the operation described in the present invention. Said solenoid valve 1 is positioned along a conduit 10 and is configured to regulate a flow of fluid along said conduit 10. In particular, in the position depicted in figure 1, the solenoid valve 1 prevents a flow of fluid from top to bottom, while it allows a flow of fluid in the opposite direction. In the second position, which is shown on the left in figure 1, the solenoid valve instead allows a flow of fluid from top to bottom. The force with which the solenoid valve 1 is maintained in a closed position is dependent on the pressure present on the two sides of the solenoid valve, therefore, as described previously, the current provided to the solenoid valve 1 does not allow to know with exactness the position that the solenoid valve 1 will be able to assume, as it is not possible to define with exactness the value of current that allows the first opening of the valve.

It is kindly noted that the solenoid valve shown in figure 1 represents only one example and that the present invention can be used with any type of solenoid valve capable of opening and closing a fluid passage along one or more conduits.

As stated, the precise and reactive control of the movement of the solenoid valve 1 represents a significant engineering challenge, especially in applications that require high precision and repeatability. The primary objective is to obtain a fluid, predictable, and consistent response, independently of load fluctuations and variations in operating conditions, which can be significant in industrial and mobile environments.

As will be clear from the continuation of the present description, the invention described herein addresses this problem by introducing an innovative control algorithm, which can be defined as "adaptive peak and hold", which is based on a synergistic combination of elements: information relating to the load present at said solenoid valve and a current signal having a peak dependent on said load. This approach, as will be clear in the continuation of the present description, allows to overcome the limitations of traditional methods, guaranteeing precise, reactive, and robust control over a wide spectrum of operating conditions, even in the presence of strong load variations.

The core of the invention therefore lies in the ability to adapt the "peak and hold" control strategy to load fluctuations. Unlike conventional methods, which use fixed values for the amplitude and duration of the current peak, the proposed algorithm exploits the information coming from the pressure transducer, suitably filtered and processed to eliminate noise and disturbances, to modulate these parameters in real time.

With reference now to figures from 2 to 5, a method of operating the solenoid valve according to a form of embodiment of the present invention will be described in detail.

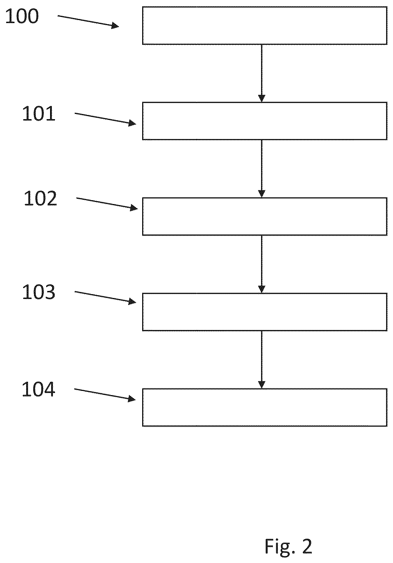

In a first step 100, shown in figure 2, the start of the method occurs. This step can be initiated for example following a command from an operator or automatically following the detection of a specific position of a joystick or according to a current provided to this solenoid valve that exceeds a predetermined value.

In a second step 101, the reading of the load signal occurs, which can be for example a pressure sensor or any other type of sensor capable of providing information regarding the load downstream and/or upstream of the solenoid valve 1. It is to be noted that this sensor can also be replaced by a calculation method or an observer.

In a third step 102, the actual calculation of the load occurs, for example by converting the signal received from a pressure transducer in mV into a pressure signal in bar.

In a fourth step 103, the actual calculation of the peak current value to be provided to this solenoid valve 1 occurs according to the pressure value calculated in step 102. In the particular example described, as regards the amplitude of the peak, the algorithm is based on a lookup table containing at least two pairs of values: pressure (measured in bar) and current (measured in milliamperes). These pairs represent specific operating points, determined experimentally through a calibration procedure that involves measuring the pressure and regulating the current until the desired movement is obtained. The choice of calibration points is crucial for the performance of the system and must cover the entire planned operating range.

Once at least two operating points are defined, the algorithm uses linear interpolation to calculate the amplitude of the corresponding current peak for any pressure value measured by the transducer. This method, simple and efficient from a computational point of view, allows to obtain an accurate estimate of the current necessary for an optimal open position of the valve in any load condition. Linear interpolation offers a good compromise between precision and complexity, but in case of significant non-linearities in the system, it is possible to use more sophisticated interpolation methods, such as polynomial or spline interpolation, to obtain greater accuracy. Moreover, the system offers a high degree of flexibility, allowing to add further calibration points to the lookup table to further refine the response and compensate for any intrinsic non-linearities of the hydraulic system or the machine. For example, in a system with a particularly non-linear response in a specific pressure interval, it is possible to add more calibration points in that interval to improve the precision of the control.

Therefore, in the present invention, with the term function is indicated any function, such as a look up table, that has as input said load signal and as output said amplitude of said current signal.

The management of the duration of the current peak can follow an analogous principle, also basing itself on a lookup table and on linear interpolation. In this case, the pairs of values in the table represent the pressure and the duration of the peak, expressed in milliseconds. The experimental determination of these operating points requires particular attention to the operator's experience, in order to guarantee an optimal feeling during the use of the machine. The objective is to identify the duration of the peak that allows for rapid and effective energization of the actuator, while avoiding instability, oscillations, or perceptible jerks during the movement. The duration of the peak directly influences the response speed of the valve and the amount of dissipated energy. An overly short peak might not provide sufficient energy to overcome the initial inertia, while an overly long peak could cause over-opening and oscillations. Similarly to the modulation of the amplitude, the use of at least two points and linear interpolation allows to calculate the optimal duration of the peak for any pressure value detected by the transducer. Also in this case, the possibility of adding points to the lookup table offers the necessary flexibility to optimize the system's behavior in different operating conditions and to adapt it to specific application needs, such as for example different movement speeds or required precisions.

The combined adoption of the modulation of the amplitude and duration of the peak, guided by the readings of the pressure transducer, confers on the control system a precision and an adaptation capacity significantly superior with respect to traditional methods. The algorithm compensates in real time for load variations, guaranteeing a fluid, predictable, and consistent response in all operating conditions, even in the presence of external perturbations. This translates into a significant improvement in the feeling for the operator, who perceives a more controlled, precise, and reactive movement. Furthermore, the adaptivity of the system contributes to reducing the mechanical and electrical stress on the actuator, prolonging its useful life and reducing maintenance costs. Finally, the energy efficiency of the system can be improved thanks to the precise modulation of the current, reducing the typical energy wastes of fixed-parameter systems.

In the fifth and final step 104, the conclusion of the procedure occurs.

Figure 3 shows instead how the value of the peak and the duration of this peak, obtained from the method shown in figure 2, are used in reality.

In a first step 200, shown in figure 2, the start of the method occurs.

In a second step 201, a current signal is received from, for example, a function that regulates a current signal to be provided to the solenoid valve as a function of an input means, such as for example a joystick.

This current value is correlated in a third step 202 to a threshold value of said current signal. This threshold value indicates a current value at which, regardless of the load present, it could be hypothesized that the solenoid valve 1 begins to open a flow along said conduit 10. This threshold value can also, according to a preferred form of embodiment of the present invention, also be dependent on the load.

In the case where the current value is lower than the threshold value, one proceeds to step 206 which indicates that the value to be provided to the solenoid valve corresponds to the value received in step 201.

In the case where the value is greater and in the case where the peak of current signal has not yet occurred, one proceeds to step 204 in which it is set that the current value to be provided to the solenoid valve corresponds to the peak value calculated in step 103. In step 205 it is then checked if the time of the peak duration has completely elapsed and one returns to step 204 until the duration of the previously calculated peak has completely passed.

Also in this case, one then proceeds to step 206, after the duration of the peak has completely elapsed.

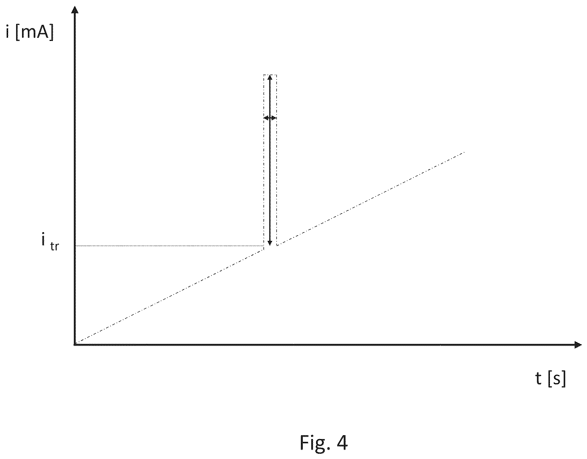

As shown in figure 4, the trend of the current signal provided to the solenoid valve 1 is monotonically increasing up to the achievement of the threshold value iₜᵣ. After reaching this value, the current peak occurs. Once the duration of the current peak has terminated, which has guaranteed the at least partial opening of the solenoid valve 1, it will then be able to continue the opening process up to the desired position.

In conclusion, the presented invention offers an innovative and highly effective method for the control of proportional pilot-operated solenoid valves, based on a linear interpolation of the "peak and hold" parameters as a function of the load pressure, measured in real time by a dedicated transducer. This approach, simple to implement but extremely effective, guarantees precise, adaptive, and robust control, significantly improving the performance of the hydraulic system and the operator's experience. The intrinsic flexibility of the lookup table, which allows adding and modifying calibration points, allows adapting the system to a wide range of applications and optimizing its behavior based on specific needs.

Even if the present invention has been described with reference to the forms of embodiment described above, it is clear to the person skilled in the art that it is possible to realize various modifications, variations, and improvements of the present invention in light of the teaching described above and within the scope of the attached claims, without departing from the object and from the protection scope of the invention.

Finally, those fields that are considered known by experts in the art have not been described to avoid unnecessarily obscuring the described invention.

Consequently, the invention is not limited to the forms of embodiment described above, but is only limited by the protection scope of the attached claims.

## Claims

1. Method of operating a solenoid valve (1), said solenoid valve (1) being configured to regulate a flow of fluid along a conduit (10) along which said solenoid valve (1) is positioned, said method comprising the following steps:
a. Receiving a command to bring said solenoid valve (1) from a closed position, at which said solenoid valve (1) prevents the flow of fluid along said conduit (10), to an open position of said solenoid valve (1), in which said open position allows at least partial passage of fluid along said conduit (10) through said solenoid valve (1);
b. Providing a load signal, said load signal being configured to directly or indirectly describe a pressure along said conduit (10) at said solenoid valve (1);
c. Providing said solenoid valve (1) with a current signal to enable said solenoid valve (1) to assume said open position, wherein said current signal comprises a current peak having an amplitude, wherein said amplitude of said peak depends on said load signal provided in said step b.

2. The method of claim 1, wherein said current peak has a duration, wherein said duration depends on said load signal provided in said step b.

3. Method according to one of claims 1 or 2, wherein said current signal has a monotonically increasing trend, wherein said current peak is positioned at a threshold value (iₜᵣ) of said current signal.

4. Method according to claim 3, wherein said threshold value (iₜᵣ) of said current signal depends on said load signal.

5. Method according to one of claims 1 to 4, wherein said amplitude of said current peak is calculated by means of a function, which has as input said load signal and as output said amplitude of said current signal.

6. Computing unit containing means for performing a method according to any of the preceding claims.

7. A computer program comprising instructions which, when the program is executed by a computer, cause the computer to perform the steps of the method of any of claims 1 to 5.

8. A computer-readable storage medium comprising instructions which, when executed by a computer, cause the computer to perform the steps of the method of any of claims 1 to 5.
